# EUROPEAN PATENT APPLICATION

(11) **EP 2 476 308 A2**
(43) Date of publication of application: **18.07.2012**
(21) Application number: 10808410.4
(22) Date of filing: 31.07.2010
(51) Int. Cl.: A01K 11/00, A61D 17/00, A61D 19/02

(54) **BIOELECTRONIC SYSTEM**

(30) Priority: 12.08.2009 US 274027 P
(71) Applicant: Barcelo Rojas, Carlos Alberto, Tabasco (MX)
(72) Inventor: Barcelo Rojas, Carlos Alberto, Tabasco (MX)
(74) Representative: Jeannet, Olivier
(86) International application number: PCT/MX2010/000077
(87) International publication number: WO 2011/019262

(57) **Abstract**

The bio-informatics system of the present invention serves to identify by electronic means, in body fluids of domestic and/or wild mammals, the metabolic changes that occur in each of the physiological moments of economic, scientific, and technological importance, associated with the female reproduction and with the health of animals in general. The system encrypts the information, analyzes it, memorizes when each one of the metabolic variables reach a predetermined level, and informs a receiver of the event.

## Description

### REFERENCE TO RELATED APPLICATIONS

This application is a non-provisional application based on US Provisional Application No. 61/274,027, filed on August 12, 2009, the content of which is incorporated by reference into this application.

### FIELD OF THE INVENTION

Bioinformatics systems according to the present invention relates to a set of devices that are used to alert the staff in charge of the artificial animal reproduction-, of the particular physical reproductive status of the females. The system is designed to determine the precise moment that a cow must be artificially fertilized to ensure the conception. By programming multiple parameters, the system according to the present invention may detect the precise moment for the copulation, pregnancy, abortion, time of delivery, and anestrum. In addition, may detect the metabolic variables that indicate an altered state of the animal's health.

### BACKGROUND OF THE INVENTION

The market shows a plurality of mechanical and electronic devices that somehow have attempted to reduce the work of artificial insemination to only inseminate one cow. However, none of these devices has achieved its objective since all require specialized personnel to supervise, verify, or discard the physiological state of estrus. This is necessary to calculate the time in which the animal must be inseminated in accordance with the successful theoretical frame of the current theory of reproduction, which indicates, in general terms, that the best time to impregnate the females is when the insemination occurs between 4 and 12 hours after the beginning of the estrus.

It should be noted that most of the known devices on the market were designed to detect the estrus in the female, in order to calculate the optimum time of insemination. Other devices were designed to examine vaginal fluids in the search for the right time to inseminate. In addition, the technical field shows sensors that detect, in the milk, estrus-related hormones, and the pedometers that detect in the animal walking, the classic hyperactivity status of the cow when in the estrus stage.

Unfortunately, currently known devices are not easy to use, as some are required to be fastened to the tail of the animal, others to the legs, and being the hardest of all, the device that requires insertion into the vagina of the animal to perform the measurements. At the other extreme, there is a device which apparently is less complicated. This device works with a sensor to detect hormones in milk and to alert the staff of the possibility that the animal is in heat. In this case, it is necessary to inform the inseminator so the animal may be monitored, to ensure that it is actually in heat.

It is also added to the list of disadvantages of all of these devices, that their use is limited to confined and tame animals, especially to dairy cattle in production, in milking systems that the majority of the world dairy farmers cannot afford. In addition, none of these devices are of universal use, as all, in different ways, including serious limitations, because they cannot be used in all kinds of breeding, nor in all bio-regions, and much less in different species of domestic or wild animals.

As you can see there is a need to find a device that is designed to determine the optimal time to conceive and to assist in the artificial insemination.

### SUMMARY OF THE INVENTION

Having described the previous technologies as background of the state of the art, it can be stated that the concept of detecting heat in animals closes a chapter in the history of the devices to facilitate the artificial insemination. A new technological proposal converts the animal estrus detection in a secondary aspect, replacing it with another more important concept related to conception. This new technology emerges from the discoveries that have to do with the place and the optimal time to conceive. As well as, with physiological aspects of the animal's reproduction that were hidden for decades by the unconditional acceptance of investigations which formulated a theory around these ideas, if not wrong, but wrongly focused.

By the foregoing, the present invention relates to a new technology, which ensures the easy and efficient detection of the opportune time to carry out successful ovule fertilization without having to monitor the estrus. In addition, prevents the indiscriminate use of sperms, and eliminates the zoo-technical methods that damage and stress the animals and equipment.
It is therefore an object of the present invention to provide a highly efficient technology to carry out artificial insemination when all the elements are combined to impregnate the females in the first heat without having to be observing or moving them until the precise moment to conceive.

The system according to the present invention may be accurately measured because it is based on a physiological constant on which the metabolic variables are always the same. In addition, the system is based on a genetic mandate that triggers a biological order on which the triggered metabolic variables concur to ensure the conception.

According to the above, the present invention relates to a system that was first detected in the body fluids, events that are of interest to the farmer, and then reports to the farmer what is happening for their timely intervention.

The computer system of the present invention comprises a bio-electronic earring and a signal receiver. The earring detects in the female fluids a combination of metabolites and physico-chemical variables, which are perceived and analyzed by a computer system before transmitting to the mobile receptor the appropriate signals that indicate in advance, the events linked to the reproduction that are economically important to the user. In addition, the system advises the geographical location of the animal in question and can detect altered states of the animal's health. Furthermore, the signal receiver has the main feature of incorporating the use of an ordinary cell phone to receive audio and textual information directly from the animal that triggers the system and alerts the personnel of the particular event that is happening for their timely intervention.

The system of the present invention is therefore-, a converter of a physiological event to encrypted signals that not only are transmitted, but are also fed to a database for its eventual process by statistical means. These signals are transmitted only when the computer system ensures that all physiological processes have reached a predetermined point.

Another feature of the system of the present invention is that it is a completely automatic system that provides uninterrupted service, without hassles, for up to two years. There is no need to either adjust anything or perform periodic tests, once the earring is placed on the ear of the animal and the system is fed with basic data. The system features specialized software to provide a bio-electronic device with basic information about the animal under supervision. In addition, the system includes a flexible program sequence that ensures multiple applications and is characterized by the software programming device that can be installed on any handheld Personal Digital Assistance device (PDA). Now, to provide the bio-electronic earring with the basic data, it is only required that software be installed on a programmer unit and a datasheet with the answers to the questions in the sequence required by the program.

The system has an automatic electronic detection device of the metabolic constants involved at the beginning and at the end of the estrus; at the beginning and the end of the ovulation; at the beginning of gestation; during pregnancy; at the time of abortion; at the beginning of the labor process; at the beginning of the temporary suspension of the reproductive activity (anestrous); and at the beginning of an altered state of health.

In addition, the present invention is directed to a measurement instrument that is placed on the animal's ear to read the body fluids and metabolic variables involved in each one of the physiological events of economic or scientific importance to the user.

The device includes two capsules hermetically sealed to withstand immersion up to 5 meters deep. The capsules are made of a high impact polymer having a color that helps to block the ultraviolet rays, to minimize the wear and tear by exposure. The posterior capsule-, corresponds to the electronics compartment and is characterized because in the external section there are built in the cylindrical pins and the polygonal pin connectors, and in the inside section, the microprocessor, the clock, the comparator, signal conditioner, and other electronics components of the system, and an electronic built in and embedded with a stabilizer dry gel that keeps the system safe from vibration and humidity. On the other hand, the earring frontal capsule corresponds to the battery compartment, and is characterized because embedded in the external section are a cylindrical pin and polygonal pin, while the inner section has embedded network lithium batteries with a stabilizing dry gel that keeps them safe from vibration and humidity.

In the present invention, the frontal capsule and the posterior capsule of the earring are interconnected by the cylindrical pin that contains the battery contacts and the polygonal pin containing sensor contacts, placed separately to help prevent the induction of spurious signals. These pins are designed with different shapes and diameters to prevent the incorrect coupling. The polygonal pin connector is characterized because it includes the needle sensors remaining in contact with the internal fluid of the specimen under surveillance, its particular shape for the edges to function as isolators between sensor conductors, also, to prevent auto induction. The cylindrical pin is characterized because it contains contacts that allow the energy flow from the batteries to the electronics, and because it is larger to prevent warming by having a larger contact surface.

The system and the device of the present invention are especially applicable to cows and heifers dedicated to the production of milk and/or meat, but its use is not limited to the sex, or in other domestic or wild mammals that exhibit similar physiological states to the bovines, moreover it is limited to humans and aquatic mammals.

In general terms, the earring is an automatic device operated with batteries that detects and reports the beginning and end of the estrus (heat); beginning and end of the ovulation; the beginning of pregnancy, the pregnancy status, the moment that the abortion occurs; the beginning of labor process; the beginning of the temporary suspension of reproductive activity (anoestrus); and the beginning of an altered state of the health. All of this is in accordance with a particular algorithm for the detection of each of the above-mentioned events. It is also an emitter of encrypted signals that transmit information of the physiological events that detects when it is for sure that all of the physiological processes have reached its climax.

All reproductions of the present invention for the different domestic or wild animal species include the same methodology design, objects, and general elements; an electronic device for detecting in the body fluids, physiological events of scientific, technological, or technical interest where all the electronic components are encapsulated, hermetically protected against water and vibrations. More specifically, electronics components such as a power source, multiplexing unit, a microprocessor, a reprogrammable reading memory - write, an exclusive reading memory, a reader who receives information from the microprocessor, a converter which converts them into intelligible messages, a mixer, a transmitter to send the signals, and a diplexer that allows using a single antenna to transmit and receive. Additionally it has a preamplifier and a receiver, in order to provide input to the data that must be stored on the device or for software updates.

Other features and benefits of the present invention may be evident from the following description in conjunction with the figures which accompany and illustrate the basic principles of the device.

### BRIEF DESCRIPTION OF DRAWINGS

- FIG.1: illustrates a perspective front view of the bio-electronic earring in accordance with the present invention when assembled.
- FIG.2: illustrates a perspective posterior view of the bio-electronic earring of FIG. 1.
- FIG.3: illustrates a detailed front view showing the bio-electronic earring not assembled, including a tool to change the batteries.
- FIG.4: illustrates a detailed back view showing the bio-electronic earring not assembled.
- FIG.5: illustrates a detailed side view showing the bio-electronic earring not assembled.
- FIG.6: illustrates a perspective view from above the posterior capsule of the bio-electronic earring of the present invention.
- FIG.7: illustrates a top view of the posterior capsule of the bio-electronic earring of this invention.
- FIG.8: illustrates a perspective front view of the interior of the frontal capsule of the bio-electronic earring of the present invention.
- FIG.9: illustrates a top view of the frontal capsule of the bio-electronic earring of the present invention.
- FIG.10: illustrates a block diagram showing the way that the electronic is laid to operate the bio-electronic earring of the present invention.
- FIG.11: illustrates a diagram representing the software that feeds the bio-electronic earring.

### DETAILED DESCRIPTION OF THE INVENTION

It must be understood that the previous overview, and the following detailed description, are only illustrative explanations and that they do not limit the invention that is claimed.

Bio-informatics system of the present invention serves to identify by electronic ways, in the body fluids of domestic or wild mammals, the metabolic changes that converge in each one of the physiological moments of economic, scientific and technological importance, relates to the female reproduction, and with the health of the animals in general. The system encrypts information, analyzes it, remembers the information when each one of the metabolic variables reaches a pre-determined level, and informs a receptor what is currently happening.

The present invention provides a bio-electronic device that detects in the animal's bodily fluids, the physical reproductive events of economic importance, and the indicative physiological events of an altered health state that serve to prevent the user from a possible gruesome state of the animal's health.

The system and device of the present invention is useful to reduce the work of the user to its minimum expression and to improve the economy of the producers.

The system of the present invention includes the design of a restraining and connection system of the bio-electronic device, by means of two pins separated from each other, to avoid the induction of spurious signals in the extremely sensitive cables of the sensors connection.

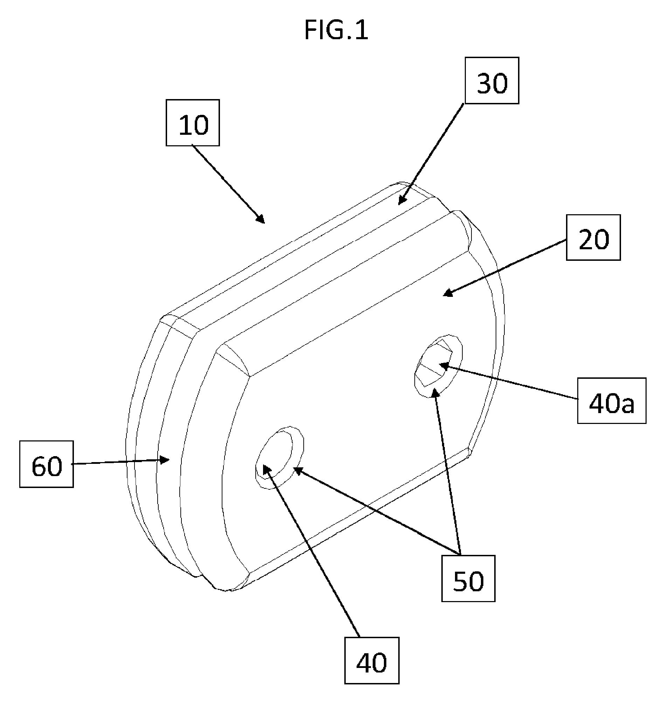

FIG.1 illustrates a perspective front view of the assembled bio-electronic earring 10. The earring 10 may have any geometric shape. The geometric shape displayed by FIG. 1 is just one of many possible forms.

The front capsule 20 and the posterior capsule 30 may have similar configurations to allow the coupling of the capsules when installing the bio-electronic earring 10 in the ear of the animal. Both capsules are perfectly coupled, trapping the bio-electronic earring on the ear of the animal, preventing the movement of the earring, which is perfectly fixed to the ear contour to block the entry of any element of nature that could take off the earring 10 or cause any damage to the electronics of the earring. The earring 10 includes the front capsule 20, with two orifices 40 that conform the input orifices of a tool 80, which may be used to change the batteries. In an embodiment of the present invention, the orifices 40, 40a may have different shapes to ensure that the tool is used correctly. In one embodiment, the orifices 40, 40a may include a concave depression 50 which facilitates the insertion of the tool.

Between the front capsule 20 and the posterior capsule 30 there is a separation 60, which is an open space that is occupied by the animal's ear at the time of installing. The separation 60 may be characterized because it can be adjusted to the thickness of the animal's ear, in view that the fixing system of the earring has a device that may control the assembly depth between the two capsules. The frontal capsule 20 and the posterior capsule 30 may be made of any material that can withstand the impacts. In an embodiment of the present invention, the capsules 20 and 30 may be made of a high impact polymer. In another embodiment, the capsules 20 and 30 may have a color that helps to block the UV in order to prevent accelerated wear and tear by exposure. In addition, the capsules 20 and 30 may be airtight sealed to withstand immersion up to 5 meters deep.

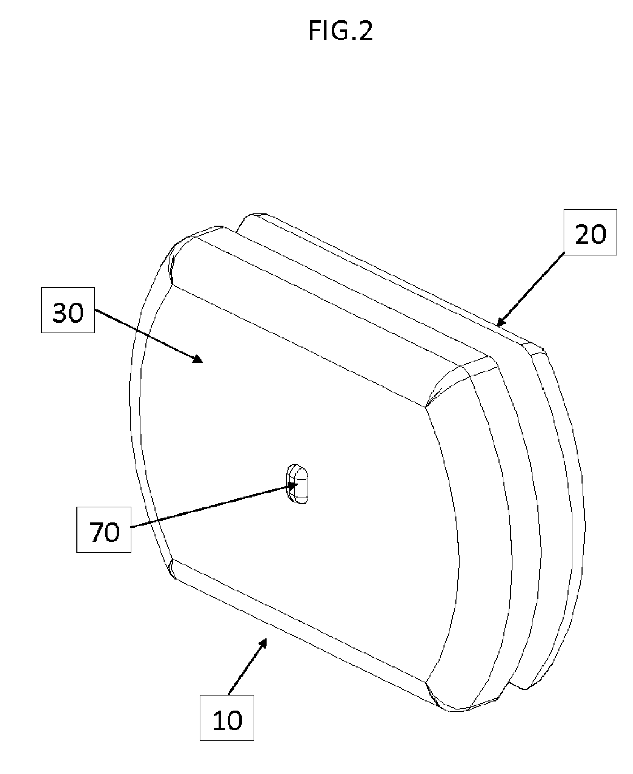

FIG.2 illustrates a perspective rear view of the bio-electronic earring 10 of FIG. 1. The posterior capsule 30 includes a visual indicator 70 that indicates the change of batteries. The visual indicator 70 may include any device that issues a visual or auditory signal when the battery charge is running out. In one embodiment of the present invention, the visual indicator may be an LED light. The visual indicator 70 may turn on and flash when the battery starts to show low load levels indicating danger of depletion, also because of its location in the center of the earring, because this avoids to the maximum, overlapping with the hair on the animal's ear.

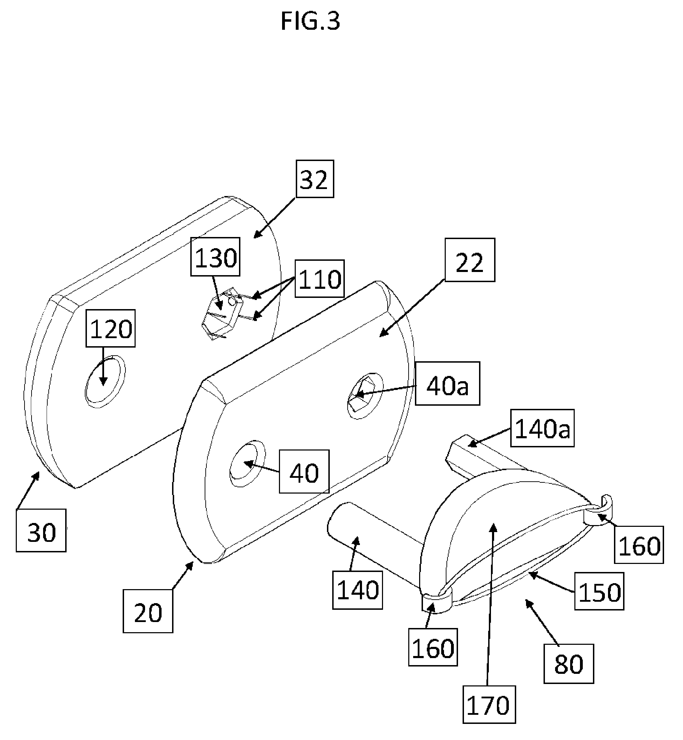

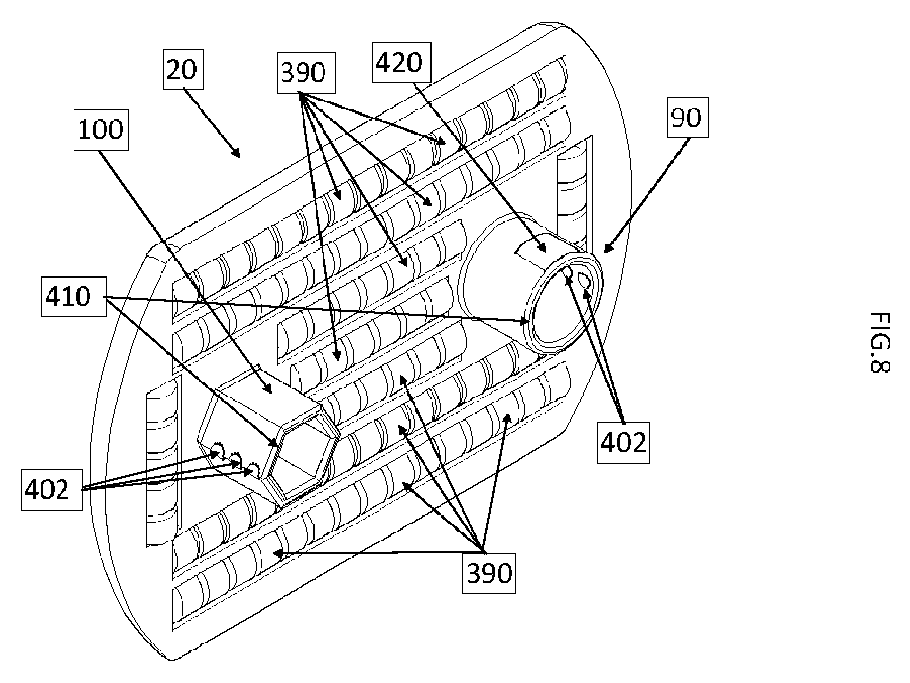

FIG. 3 illustrates a detailed front view showing the disassembled bio-electronic earring. The figure shows the front capsule 20, the posterior capsule 30, and the tool 80 for changing the battery. A group of lithium batteries may be placed inside the front capsule 20, the group of batteries may be immersed in a dry gel to prevent the batteries from moving in case of vibration or shock, and that they are free from humidity during the life cycle. The front capsule 20 is the section of the earring which can be taken off from the animal's ear to change, or where appropriate, to recharge when the battery is exhausted. The front capsule 20 is a piece that at the time of release does not affect its counterpart, the posterior capsule 30. The front capsule 20 has on its outer face 22 holes 40, 40a, on which the tool 80 for battery change is introduced. On the interior face 24 of the front capsule 20 it has built in a clamping pin 100 and a connection pin 90 of the earring 10 which are illustrated in more detail in FIG.8.

For its part, the posterior capsule 30 is characterized because in its interior is embedded the electronic system, which is immersed in a dry gel that prevents movement by vibration or shock, and is free of humidity during its life cycle. The posterior capsule 30 is the part of the earring 10 that must be kept fixed, attached to the ear throughout the productive life of the animal, on the spot of the ear where the principal irrigation or collection vessels are located. This is due largely in that the posterior capsule 30 includes the sensing needles 110, same that preferably should never move from the site where they were inserted, on penalty of destroying them or to possibly cause infections resulting in fibrosis which prevent the sampling. Another detail of the posterior capsule 30 is that embedded on its interior face 32, in low relief, are the connector 130 of the clamping pin 100 and the connector 120 of the connection pin 90.

The sensing needles 110 may be made of bio-compatible materials that do not generate allergic reactions and the development of fibrosis, allowing them to stay indefinitely buried beneath the skin and cartilage.

The tool 80 is the key for changing the batteries and includes terminal apertures 140, 140a, multi-dimensional adjustment band 150, and support band 160 and the base 170 to pressure the tool 80. In one embodiment of the present invention, the tool 80 may have an "M" shape. The tool 80 for changing the batteries is characterized because it has an ergonomic grip and manipulation system that has a base 170 that serves as a support point to push and multi-dimensional adjustment band 150 that accepts different thicknesses of the fingers of the user. These two elements together provide security to hold and manipulate the tool without risk. The opening terminals 140 may allow a single way of use, since the circular shape of the terminal 140, and the polygonal shape of the terminal 140a; match the entry holes 40, 40a of the front capsule.

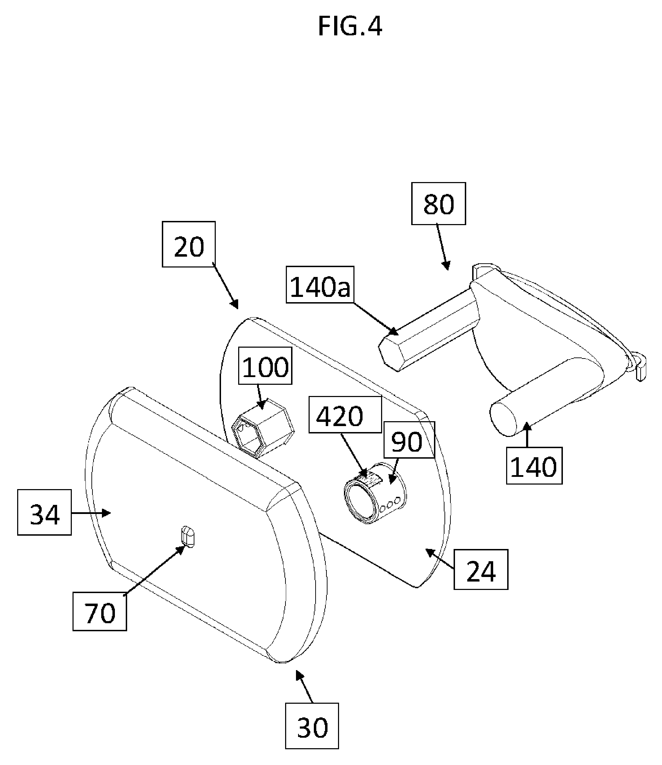

FIG.4 illustrates a detailed back view showing the disassembled bio-electronic earring. This figure highlights the subjection pin 100 and the connection pin 90 which are embedded on the internal face 24 of the front capsule 20. The pins subjection 100 and connection 90 may be hollow inside. The pins 90 and 100, terminals 140, 140a, holes 40 and 40a, and connectors 120 and 130, may have any physical shape as long as the shapes complement each other. This is necessary so that the terminals 140, 140a of the tool 80 may pass through the subjection pin 100 and the connection pin 90 of the front capsule 20, and so the subjection pin 100 and connection pin 90 may contact the connectors 130 and 120 respectively of the posterior capsule 30. In one embodiment of the present invention, the external face of the subjection pin 100 may be polygonal and the external face surface of the connection pin 90 may be circular.

In the posterior capsule 30, the visual indicator 70 of "change battery" may be placed on the exterior face 34 of the capsule; thus, the alarm signal (hereafter called "light") may be positioned on the back of the animal's ear. This may help to avoid the animal's hair from covering the light or preventing the staff from seeing the light. However, as we shall see later, this light, when it is turned on for the first time, sends a report of exhaustion to the recipient mobile signal, which is repeated 3 times in various periods of time, so the signal may be captured by one of the personnel during the working shift, reporting the number issued, because once the last exhausted information is sent, the system reserves sufficient power capacity to record and send a report to the field staff of any physiological events of importance that could occur during the next 72 hours.

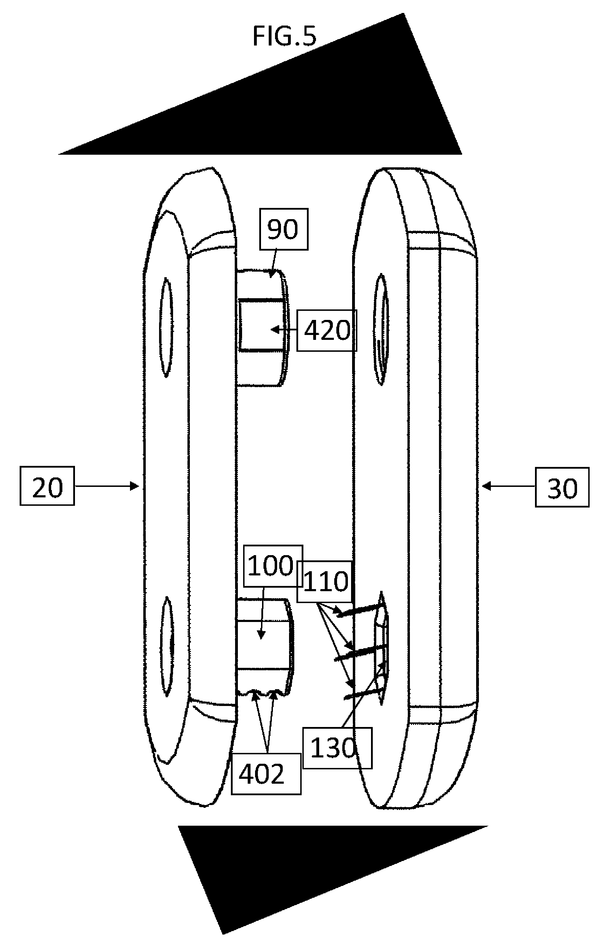

FIG. 5 illustrates a detailed side view showing the disassembled bio-electronic earring 10. It can clearly be seen from this figure that in front capsule 20, the subjection pin 100, and the connection pin 90 have different shapes and thickness, and that they are separate from each other. These pins are part of the subjection and connection mechanism. In one embodiment, the subjection pin 100 has preferably a polygonal shape and it is designed with this form, because the connector 130 where assembled, also has the same shape. In the connector 130 there are located sensing or sampling needles 110. Because both parts have the same shape, edges function as isolation between the sensor conductors, which act as electromagnetic insulators to prevent the trans-conductance.

The connection pin 90 is characterized because it includes the contacts that allow the energy flow from the batteries to the electronics, and as being of greater thickness, to prevent warming of the elements for having a larger contact area.

Posterior capsule 30 highlighted the sensor needles 110, these are characterized because they are part of the bio-electronic device, which makes permanent contact with the bodily fluids. Sensor needles110 are made with bio-compatible materials that do not generate allergic reactions or the development of fibrosis, a quality that allows the sensor needles to stay indefinitely, inserted beneath the skin and over the cartilage. In another embodiment, the sensor needles 110 may be made of gold.

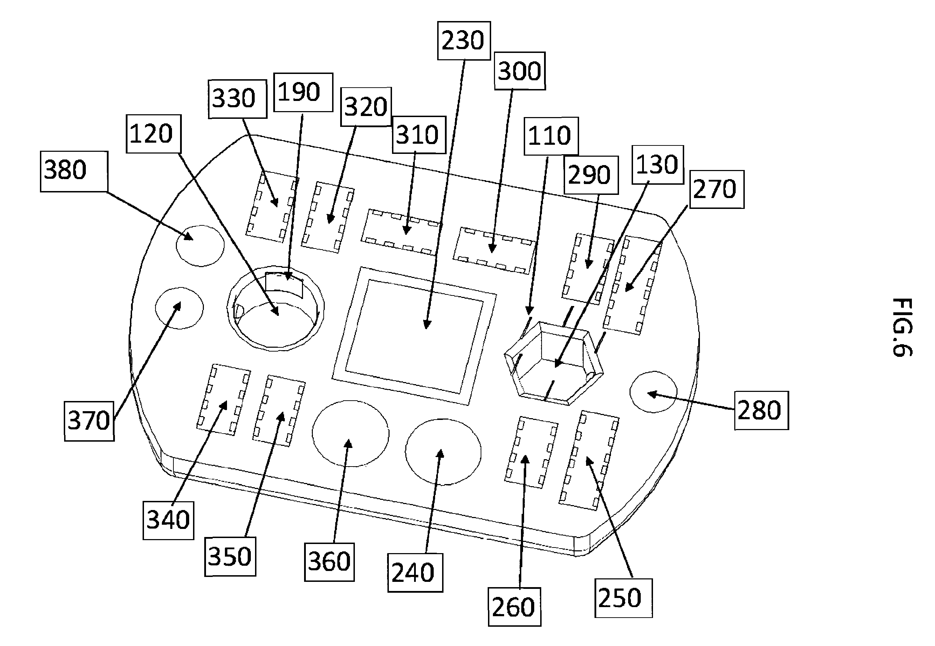

FIG.6 illustrates a top perspective view of the posterior capsule 30 of the bio-electronic earring 10 of the present invention. The posterior capsule 30 is the compartment where the electronics are located. Inside of the posterior capsule 30 can be found the basic components that are shown only as an illustrative character and not limitative: the microprocessor 230 dedicated to run different program sequences of monitoring and control; the clock 240 which generates the signal that determines the frequency of operation of the system; the comparer 250 that compares the reading values against the value stored as a reference, the signal conditioners 260 that filter, strengthen, and convert the signals obtained by the sensors 270. The sensors 270 are responsible for converting the physical/chemical levels of the metabolic variables in electrical impulses. In addition, it contains the memory RAM 280 responsible for storing the information that is being processed, the information that is going to be processed, and the information that was just processed; the memory ROM 290 that indicates to the microprocessor the actions to perform according to the input signals; the memory EPROM 300 that is responsible for storing the history of the animal which is being monitored; the reader 310 that is responsible for receiving the instructions of the microprocessor and send them to the AD/DA converter; the AD/DA converter 320 that is responsible for transforming the encoded signals into something intelligible to humans; the COMBINATOR 330 which is responsible for integrating the message to be sent, by adding relevant data such as: phone number, the animal data and the information generated by the microprocessor with the signals received by the sensors; the DIPLEXER 340 that allows the use of a single antenna to transmit and receive signals; PRE AMPLIFIER 350 which is responsible for increasing the level of the signals received to be processed by the receiver 360; the receiver 360 that is responsible for obtaining the received radio frequency signal, the incorporated information; the power source 370 is responsible for providing the energy in the appropriate form to keep the device functioning constantly; the MUX 380 that is responsible for converting the data input that comes on parallel form to the serial form thus it can be interpreted by the next stage.

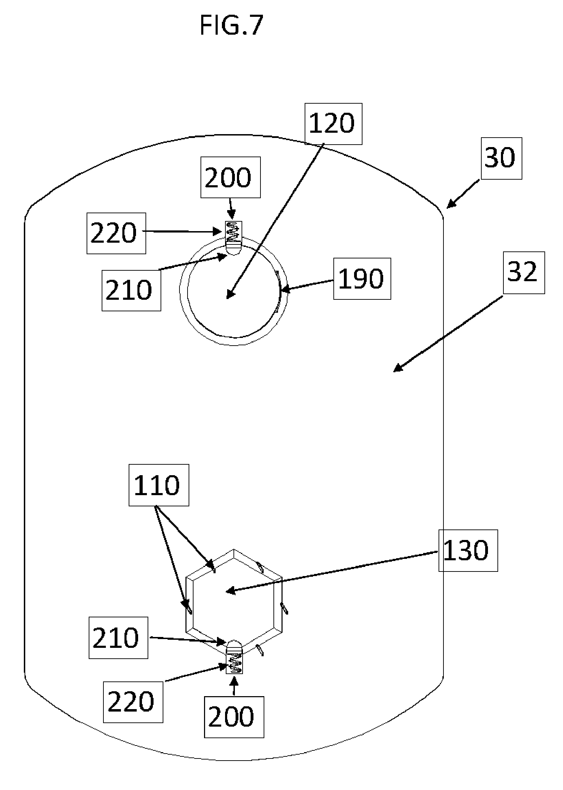

FIG.7 illustrates a top view of the posterior capsule 30 of the bio-electronic earring 10 of the present invention. In this figure you can see very clearly the differences in size and shape of the connectors 120 and 130. Furthermore, the figure shows that the electronic components are perfectly encapsulated. The connector 130 that belongs to the subjection pin 100 is characterized by having sensor needles 110, located at the center of each side, because basically, the edges of the polygon act as electromagnetic insulation to prevent the trans-conductance between the needles 110. Furthermore, connector 120 is characterized by hosting the electronic contact 190.

For its part, the electronic contact 190 is characterized by being a fixed plate having a large surface that ensures a precise connection even in vibration, shock, or by repeated blows conditions. The restraint and fixing system 200 of the pins 90 and the pin 100 is characterized as being a mobile unit including a barrel 210 against a hole that allows a part of the barrel 210 to be exposed, or stick out inside the cavity formed by the connector 120 and the connector 130, as such, which, when penetrating the pins, push the barrel 210 on the spring 220, opening a way to a point of the subjection pin 100 and the connection pin 90, in which finds holes (402), where the barrel 210, powered by the spring 220, automatically penetrates and attaches to the subjection pin 100 inside the connector 130, and the connection pin 90 inside the connector 120.

FIG.8 illustrates a perspective front view of the inside of the frontal capsule 20 of the bio-electronic earring 10 of the present invention. This figure shows the lithium battery compartment 390. These batteries 390 are especially designed for long periods of intermittent load missions. In one embodiment, the batteries 390 are manufactured with a thickness slightly greater than the thickness of a coin.

On the side of the pins 90 and 100 can be observed-, a series of holes 402 which demarcate the depth variable to which may be set on the corresponding connector. This quality guarantees that the bio-electronic earring 10 can be adjusted to the thickness of the animal's ear on which it is installed, to keep it firm, without impeding the blood circulation of the tissue. In addition, it can be see that the edge 410 of the pins 90 and 100 is sloped, with cutting edge for cutting or piercing the ear. In addition, the connection pin 90 has a fixed plate 420 of large surface that ensures a precise connection even in vibration, shock, or repeated blows conditions.

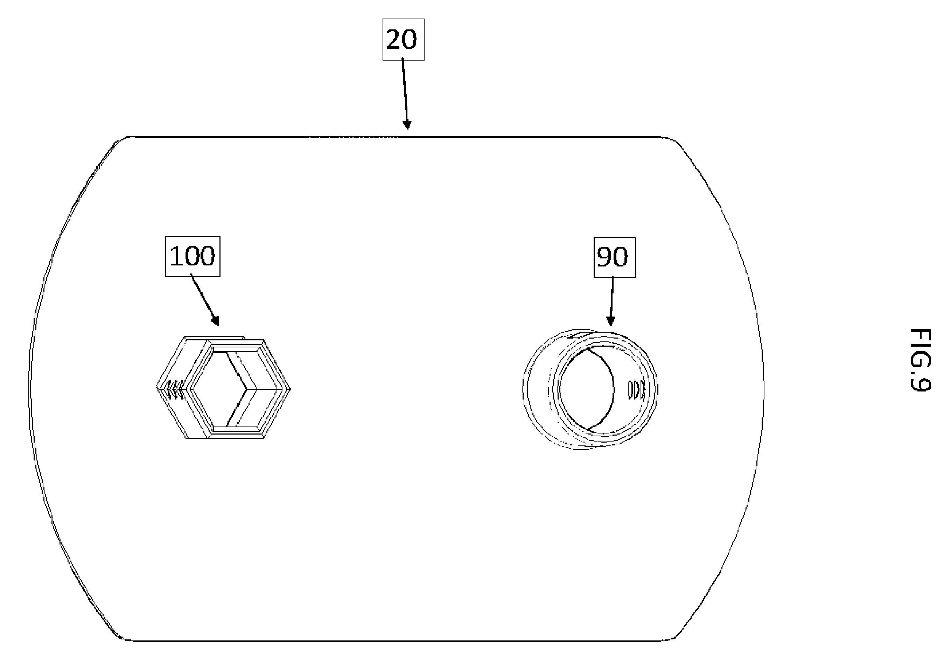

FIG.9 illustrates a top view of the front capsule 20 of the bio-electronic earring 10 of the present invention. This figure shows that the batteries 390 are fully encapsulated. This figure can be seen clearly that the pins 90 and 100 are hollow, and this in addition to allow the passage of the tool 80, is also used thus through them, the ear pieces can leave, when piercing the ears.

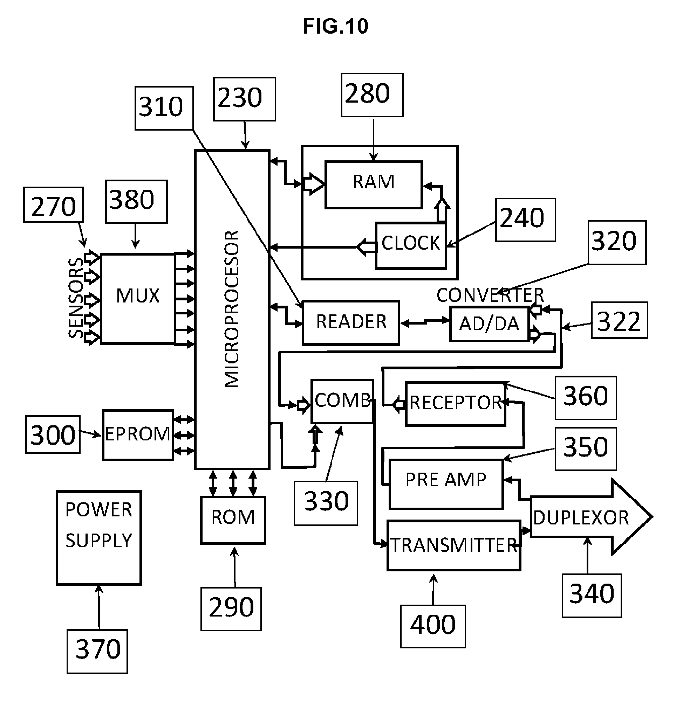

FIG.10 illustrates a block diagram showing how the electronics that runs the bio-electronic earring 10 are lying drown. The sensors 270, are the electronic components responsible for converting the physical/chemical levels of the metabolic variables involved in the different physiological states of economic importance to the farmer, in electrical impulses of magnitude and characteristics appropriate to be used by the electronic specialized in informing the determining changes on important economic stages to maximize the reproduction of the animals, as well as the health status. When the sensors 270 receive the signal, they limit and get it ready for the next stage, that is the MUX or multiplexor 380, that is responsible for forming the suitable access route for each signal and combine several signals when required. The next stage is the microprocessor 230 that is where the leading decision in view of the entry and internal function of the equipment are taken. The microprocessor needs several auxiliary elements such as a clock 240, access random memory RAM 280, reading memory ROM 290 and the programmable memory EPROM 300. The clock 240 works as the heart of the system, marking the passage of the necessary processes to carry out the functions of the bio-electronic device. The RAM 280 stores the information that is being processed. The ROM (35) includes the software (computer program) that indicates to the microprocessor the actions to perform according to the input signals or the indications of the inner functioning. Regarding the programmable memory EPROM 300, it is where the history of the monitored animal is stored, such as date of birth, their ancestors, insemination method of the mother, health problems or the beginning of the estrous cycle. In turn, this element stores the basic parameters of the species or race under observation. When a condition is found that must be informed, the generated signal passes to the reader 310 who delivers its output to digital converter - analog AD/DA 320, where the signal is transformed into something intelligible to the human. The output 322 of the converter 320 is attached to the mixer COMB 330 that is received from another point of the microprocessor the indication to "turn on" the transmitter 400. Then, the signal is amplified and is attached to the DIPLEXER 340 to be sent to the cell phone antenna. The same antenna allows you to receive the signal of the programmer, which is attached to the DIPLEXER 340 and extracts the necessary portion to excite the PRE - AMP (preamplifier) 350, which provides the right signal to the receptor 360 to impulse to the analog-digital converter AD/DA 320, where it becomes something that can be used by the microprocessor which is fed by the reader 310. This signal will be conducted once processed to the programmable memory EPROM 300 to be used as identification of the animal and to save data pertaining to species or race and the life of the same. Obviously, the power supply 370 is responsible for providing the energy in the appropriate form to keep the device constantly running up on an exhausted battery, which is expected to efficiently operate for up to two years. One of the microprocessor functions will be controlling the power source to keep/turn-off the sections that are not required, and in operation, certain vital sections for the monitoring of sensors and possible entries for the receiving system radio, so that only the necessary sections of the equipment will be turned on according to the way in which the events are presented, barely enough time to send messages, a technical quality that makes very efficient use of energy.

The device of the present invention is characterized because it contains an upgradeable software that does not require it to be removed from the animal's ear to be programmable on the field by a handheld computer.

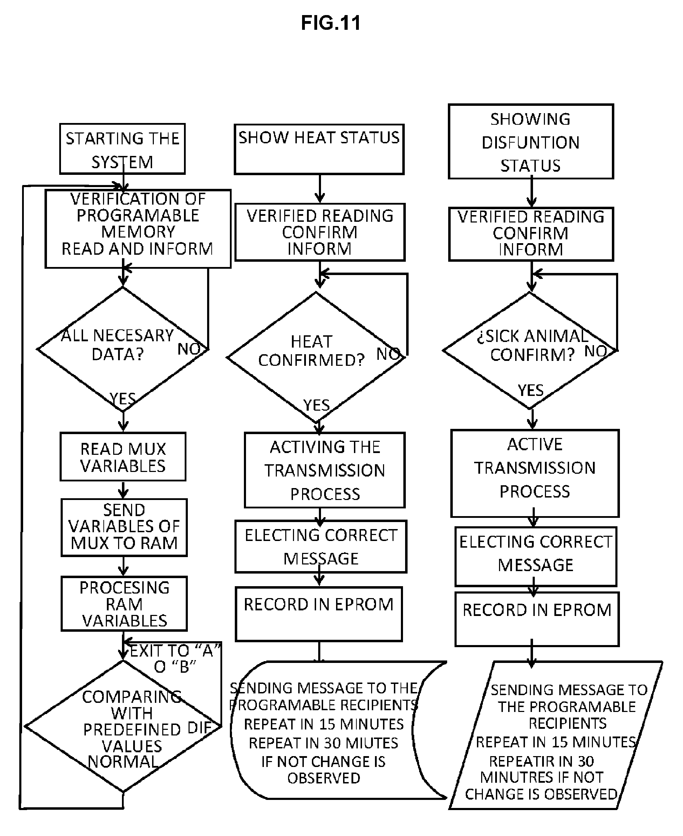

The FIG.11 is a diagram representing the software to feed the bio-electronic earring 10. The figure shows an outline of the logical sequence that the computer program will follow to coordinate the actions of the device. The initialization of the system comprises erasing all data that exists on both the operating memory RAM 280, as well as the data of the programmable memory EPROM 300, and then verifying the presence of the sensors 270 as input devices, and the transmitter 400 as the output device. As the program is common for several models, it must identify which are the associated sensors and the characteristics of the transmitter to adjust the times. Then, the system is ready to receive the minimum information to operate according to the needs of the user, by example:
a) Identification of the animal including species or breed
b) Ranch or farm name
c) Cell phone or telephone number having capacity for the reception of text messages where the results need to be sent for status of the animal
d) Owner name
e) System operator's name
f) Current age
g) Start of reproductive age
h) Severe suffering since birth
Additionally you can add additional data that you want to:
1) Name of parents
2) Race or species of each one of them
3) Age of each of them at the time of the birth of the animal
4) Insemination method
5) Previous owner's name
6) Births
7) Other defined by the user (allergies, findings, etc.)

Having the minimum required information, the system continues to the next step which is to verify that the data was appropriately placed in corresponding positions and then reads the physical variables of the animal.

Compared to reference variables stored in the permanent memory ROM 290, and the decision is taken to send the right message, at the moment can be:
A) Supported, data in order
B) Data were improperly stored
C) Parameter out of range

If the first reply is obtained, then it can be considered that the bio-electronic earring 10 has been correctly configured, otherwise one of the following procedures must be followed.

If you get the second response, that means that data was improperly stored and you must reboot and recapture the data by taking care of the correct order.
If you get the third answer, parameter out of range, it is possible that the animal is sick or damaged the bio-electronic earring.

When everything is correct the program shall verify whether the physical parameters received from the sensors correspond to any of the states programmed on the permanent memory, if they are, then it will take the correct route, that the animal is in heat, then it will activate the transmission process, immediately will elect the right message, will store the information in the programmable memory for future reference, and will send the message to the programmed recipients.

The main feature of the system is that the mobile receiver is a cell phone capable of receiving text messages and memory for events for as many as animals are in the farm multiplied by 12 and with the ability to connect to a computer clear information that can later be used for statistical and reference purposes.

The bio-electronic earring 10 receives by electronic ways the metabolic variables that converge on each one of the physiological moments related to reproduction and health of the animal, encodes them, memorizes and reports them.

The mobile receiver receives the signal emitted by the bio-electronic earring and sends a visual and auditive signal to the user, informing what is happening with each animal that triggers the system.

In the present invention, in the bio-electronic earring the important moments are defined not only by hormonal patterns but also by metabolic variables that have to do with body temperature peaks and blood pressure peaks.

In addition, the user can send instruction to the biomedical earring to request particular information about the animal, for example, if at a given moment the user wants to know where is the animal "x", the user may request the information from the earring.

The user may register in the memory of the earring the information about the male used for the insemination, therapeutic treatment used on the requested animal, or any other information you may want to save or keep on the records, in case that may be needed later.

Once all the physiological events of importance for the user are recorded in the earring, this information is encoded in a system called reproductive clock, which is responsible to anticipate and to report what could happen in the animal when it recognizes an event recorded in the previous breeding cycle. Reproductive clock registers importance physiological events; thus, the user may take precautions.

The data retrieval system memorizes the particular information of all the physiological events related with the optimal to conceive, and encodes them as physiological variables so that the system recognizes the animal when activated again, in order to send an advance report at the specific time at which the animal must be cared.

In an embodiment of the present invention, the light emitted by the bio-electronic earring is color coded. For example, the emitted light emitted may be green to alert the field staff of the female pregnancy status. The light may be yellow to alert the field staff when it detects an abortion. In one embodiment, the light is flashing.

The earring may operate based on the registration and analysis of at least two metabolic variables of each one of the physiological events related with the reproduction, before issuing a report to the data collection system.

The earring basically transforms metabolic changes in visual and audio signals that inform in advance about the physic-reproductive events of economic importance for the breeding of wild or domestic cattle.

Furthermore, the user may program the earring in the field; thus, its sensors may detect the specific levels of metabolic variables depending on the animal species concerned.

In addition, the earring may keep in its memory the relevant information of the animal, even one that is not a female or that is not part of the reproduction herd, and allows to keep constant control of the herd intended for consumption, memorizing the relevant data from the birth, type of food, additives or food supplements, vaccination and prophylaxis to prevent diseases, major health problems, etc. That undoubtedly may help on the creation of a national cattle herd database.

The bio-electronic device or remote sensor system may have three or more than five entries and between three or more than five outputs. Each output has a predetermined action by using software. The number of inputs and outputs may depend on the amount of information that the user requires from the earring. Illustrative, the present invention uses a device having five inputs and five outputs.

### First condition: the battery charge has decreased from 75%

1- First response: the character chain #1 is sent to the transmitter and the change of status of a memory actives the transmitter to emit an alert signal, at the same time that the light of "low battery" is activated on the top section of the battery pack, this light has a retention system, even when the radio is turned off immediately to save power, the light may not be turned off until the battery pack is withdrawn from the device. Second condition: the average temperature has risen more than half a degree and the concentration of hormone #1 has dramatically increased.
2- Second response; the character chain #2 may be sent to the transmitter and the change of status of a memory actives the radio to transmit the information, immediately, as soon as it concludes the transmission of the information, the radio is turned off to save energy.
3- Third condition: maintaining the conditions of the preceding paragraph but there is variation in pH
   Third response: the character chain #3 may be sent to the transmitter and the change of status of memory actives the radio to transmit the information, immediately the radio turns off at the end of its mission to save energy.
4- Fourth condition: the concentration of the hormone #1, hormone begins to decrease as well as temperature and increases the concentration of hormone #2.
   Fourth response: the character chain #4 arrives in the radio to be sent and at the same time the change of status of memory connects the transmitter, when concluding the transmission of the message, may be turned off again.
5- Fifth condition: temperature has returned to normal state and the concentration of hormones has fallen to normal.
   Fifth response: the character chain #5 may be sent to the transmitter and its associated memory may change the state to connect it and deliver its report, in the same way at the conclusion of the report, the radio turns off to save power.
   Each message must contain at least the following data:
   Time and date
   The emitter identification
   Content of the message
   Number of the message
TIME AND DATE - it's the time in military format and the date according to the schema of each country in which the message is generated.

IDENTIFICATION OF THE EMITTER - contains information to know what animal is involved, either the user wants the cow's name, the consecutive number of the earring, the number of the animal from the herd, the unique identification number of the cattle, etc.

MESSAGE CONTENT- the information that is generated and transmitted to the system may be regarding to the animal having the earring or the battery device battery status.

NUMBER OF THE MESSAGE - the importance of this issue is crucial, because we will know if it is the first or second notice; if you lose one, then we will receive a second or third notice, or until the system ensures that the message was read and knows that operations proceed.

Having described the present invention, this is considered a novelty, so it is claimed in the following:

## Claims

1. A bio-electronic earring (10) adapted to be placed on an animal ear, the bio-electronic earring (10) comprising:
a front capsule (20);
a posterior capsule (30);
a space between the front capsule (20) and the posterior capsule (30) adapted to receive the animal ear;
wherein the front capsule (20) contains inside an encapsulated battery system;
wherein the posterior capsule (30) contains inside an electronics system; and
wherein the front capsule (20) and the posterior capsule (30) attach to each other.

2. The bio-electronic earring (10) according to claim 1, wherein the front capsule (20) includes a first pin and a second pin, where the first pin and the second pin have different physical configurations;
wherein the posterior capsule (30) includes a first connector and a second connector, wherein the first connector has a physical configuration similar to the first pin,
wherein the second connector has a physical similar configuration to the second pin; and
wherein the first pin connects to the first connector and the second pin connects to the second connector leaving space between the two capsules.

3. The bio-electronic earring (10) according to claim 1, further including a tool to remove the front capsule (20).

4. The bio-electronic earring (10) according to claim 1, wherein the space occupied by the animal ear is adjustable.

5. The bio-electronic earring (10) according to claim 1, wherein the posterior capsule (30) includes a visual indicator to indicate change of batteries.

6. The bio-electronic earring (10) according to claim 1, wherein the posterior capsule (30) includes sensor needles (110) adapted to be inserted into the animal ear.

7. The bio-electronic earring (10) according to claim 1, wherein the electronics system is immersed in a dry gel.

8. The bio-electronic earring (10) according to claim 2, wherein the first pin includes contacts that allow a flow of energy from the battery system to the electronics system.

9. The bio-electronic earring (10) according to claim 1, further including a mobile receiver, wherein the earring (10) sends a signal to the mobile receiver indicating a range of time in which the animal can conceive.

10. The bio-electronic earring (10) according to claim 9, wherein the mobile receiver is a mobile phone.

11. The bio-electronic earring (10) according to claim 9, wherein the animal-related physiological events includes metabolic constants involved at the beginning and end of estrus; metabolic constants involved at the beginning and end of ovulation; metabolic constants involved at the beginning of gestation and during the state of pregnancy; metabolic constants involved at the time of abortion; metabolic constants involved during childbirth; metabolic constants involved at the beginning of the temporary suspension of a reproductive activity (anestrous); and metabolic constants involved at the beginning of an altered health state.
